# EUROPÄISCHE PATENTSCHRIFT

(11) **EP 1 145 752 B1**
(45) Veröffentlichungstag und Bekanntmachung des Hinweises auf die Patenterteilung: **12.11.2008**
(21) Anmeldenummer: 01108809.3
(22) Anmeldetag: 07.04.2001
(51) Int. Cl.: B01D 35/30

(54) **Vakuumsfiltrationsapparat zur modularen Verwendbarkeit, Modul zur Erweiterung des Vakuumfiltrationsapparates und modulare Vakuumfiltrationsvorrichtung**
Vacuum filter apparatus to be used as module, module for the extension of the vacuum filter apparatus and modular vacuum filter device
Appareil de filtration sous vide utilisable sous la forme de module, Module pour l' extension de l' appareil de filtration sous vide et dispositif modulaire de filtration sous vide

(30) Priorität: 11.04.2000 DE 10017721
(43) Veröffentlichungstag der Anmeldung: 17.10.2001
(73) Patentinhaber: Whatman GmbH, 37586 Dassel (DE)
(72) Erfinder: Konstantin, Peter, Dr., 37627 Heinade (DE); Kemenji, Dieter, 37574 Einbeck (DE); Gebhardt, Michael, 37581 Bad Gandersheim (DE)
(74) Vertreter: Luderschmidt, Schüler & Partner

(56) Entgegenhaltungen:
- DE-U- 7 423 656
- DE-U- 20 006 418
- US-A- 4 415 449
- US-A- 5 653 481
- US-A- 6 030 006

## Beschreibung

Die vorliegende Erfindung betrifft einen Vakuumfiltrationsapparat, ein Modul zur Erweiterung des Vakuumfiltrationsapparates sowie eine modulare Vakuumfiltrationsvorrichtung.

In dem Produktkatalog "Membran-Separationstechnik für Forschung und Qualitätskontrolle", Seite 85, der Sartorius AG, Deutschland, aus dem Jahre 1999 ist ein Vakuumfiltrationsapparat mit dem derzeit üblichen Aufbau gezeigt. Der bekannte Vakuumfiltrationsapparat weist ein Vakuumrohr auf, das durch eine Vakuumpumpe über eine Öffnung an einer Seite des Vakuumrohres evakuierbar ist. Die andere Seite des Vakuumrohres ist verschlossen. An der Längsseite des Vakuumrohres sind mehrere rohrförmige Anschlußstücke vorgesehen, die eine Verbindung mit dem Innenraum des Vakuumrohres herstellen, wobei die Anschlußstücke jeweils einen Öffnungs- bzw. Schließmechanismus aufweisen. An die Anschlußstücke schließen sich Filtrationsaufsätze an, die im wesentlichen aus einem Behälter für die zu filtrierende Substanz, dem Filtermittel und einem Verbindungsstück zum Verbinden mit dem Anschlußstück des Vakuumrohres besteht. Sollen besonders viele unterschiedliche Substanzen parallel gefiltert werden, so kommen Vakuumsfiltrationsapparate zum Einsatz, die ein langes Vakuumrohr aufweisen, an dem entsprechend viele Anschlußstücke zur Aufnahme der Filtrationsaufsätze vorgesehen sind. Bei geringerem Umfang kommen Vakuumfiltrationsapparate zum Einsatz, die entsprechend weniger Filtrationsaufsätze aufweisen. Die bekannten Vakuumfiltrationsapparate haben sich bewährt und zu sehr guten Ergebnissen geführt. Da die Anzahl an unterschiedlichen zu untersuchenden Substanzen jedoch schwanken kann, sind mehrere Vakuumsfiltrationsapparate mit unterschiedlichen Kapazitäten notwendig.

Die DE-GM 74 23 656 beschreibt einen ähnlichen Vakuumfiltrationsapparat, bei dem das Vakuumrohr öffnungsseitig in Form einer Schlaucholive ausgebildet ist, so daß ein Schlauch aufgesteckt werden kann, der wiederum zu einer Saugpumpe führt.

Die DE 31 38 256 C2 offenbart eine Vakuumsfiltrationsbank mit einer Vakuumverteilerleitung, die einenendes verschlossen und anderenendes mit einem Anschluß versehen ist, der die Form einer Flanschverbindung aufweist. An die Flanschverbindung kann eine Vakuumquelle angeschlossen werden.

Der Nachteil des vorstehend diskutierten Standes der Technik besteht darin, daß das Vakuumrohr bzw. Verteilerrohr schwer zu reinigen ist. Darüber hinaus sind - wie oben bereits erläutert - mehrere Vakuumfiltrationsapparate unterschiedlicher Kapazität erforderlich, um einer Schwankung bei der Anzahl der zu untersuchenden Substanzen zu begegnen.

Die Aufgabe der vorliegenden Erfindung besteht somit darin, einen Vakuumsfiltrationsapparat zu schaffen, der einfach zu reinigen ist und der mit Vakuumfiltrationsapparaten gleicher Art einfach und schnell verbunden werden kann, um die Kapazität zu erhöhen. Des weiteren besteht die Aufgabe der vorliegenden Erfindung darin, ein Mittel anzugeben, mit dem die Kapazität des Vakuumsfiltrationsapparates vergrößert werden kann.

Die Lösung der Aufgabe erfolgt an Hand der im Patentanspruch 1 bzw. der im nebengeordneten Patentanspruch 11 angegebenen Merkmale.

Der erfindungsgemäße Vakuumsfiltrationsapparat umfaßt ein Vakuumrohr mit einem oder mehreren Anschlußstücken zur Aufnahme von Filtrationsaufsätzen.

Unter einem Anschlußstück wird ein vom Vakuumrohr abzweigendes im wesentlich rohrförmiges Element verstanden, das an einem Ende eine Verbindung zum Innenraum des Vakuumrohres herstellt und am anderen Ende ein Mittel zur Aufnahme des Filtrationsaufsatzes aufweist.

Das Vakuumrohr weist an dessen Endseiten Flansche auf.

Ferner umfaßt der Vakuumsfiltrationsapparat ein Verschlußstück, das unter Benutzung eines Verbindungselementes und unter Zwischenlage einer Dichtung mit einem endseitigen Flansch des Vakuumrohres verbunden werden kann. Das Verschlußstück ist geeignet, das Rohrende dicht abzuschließen, wobei die Dichtung im Bereich der Grenze zwischen Verschlußstück und Flansch seine Dichtwirkung entfaltet. Des weiteren umfaßt der Vakuumfiltrationsapparat eine Schlaucholive, die beispielsweise der Aufnahme einer Schlauchleitung dient, die wiederum zu einer Vakuumpumpe führen kann. An der Schlaucholive ist weiterhin ein umlaufender Flansch vorgesehen, wobei der umlaufende Flansch über ein weiteres Verbindungselement und unter Zwischenlage einer weiteren Dichtung mit dem anderen endseitigen Flansch des Vakuumrohres verbunden werden kann.

Unter Verbindungsmitteln werden in der vorliegenden Erfindung diejenigen Mittel zur Verbindung von Elementen verstanden, die eine lösbare Verbindung schaffen.

Der Vorteil des erfindungsgemäßen Vakuumfiltrationsapparates besteht darin, daß das Verschlußstück und/oder die Schlaucholive mit dem umlaufenden Flansch von den endseitigen Flanschen des Vakuumrohres gelöst werden können. An den somit freigelegten Flanschen können ein oder mehrere Erweiterungsmodule hintereinander angeflanscht werden. Diese Erweiterungsmodule entsprechen im wesentlichen dem beschriebenen Vakuumrohr mit Anschlußstücken und Filtrationsaufsätzen. Das Verschlußstück und/oder die Schlaucholive können mit den neuen Endseiten der somit entstandenen Vakuumfiltrationsvorrichtung, die eine größere Kapazität als der ursprüngliche Vakuumfiltrationsapparat allein aufweist, verbunden werden, so daß die Vakuumfiltrationsvorrichtung abgedichtet ist. Um wiederum eine geringere Kapazität zu erzielen, müssen entsprechend viele Erweiterungsmodule entfernt werden.

Die Kapazität des erfindungsgemäßen Vakuumfiltrationsapparates ist somit schnell und einfach verringerbar bzw. vergrößerbar.

In einer vorteilhaften Ausführungsform des erfindungsgemäßen Vakuumfiltrationsapparates ist das Verbindungselement ein Klemmverbindungselement. Der Vorteil dieses Verbindungselementes besteht darin, daß die Verbindung zwischen den Flanschen bzw. dem Verschlußstück und dem Flansch schnell und einfach zu lösen sind. Entsprechendes gilt für die Herstellung dieser Verbindungen. Somit läßt sich die Kapazität des Vakuumfiltrationsapparates ohne großen zeitlichen und technischen Aufwand erhöhen oder verringern.

In einer weiteren vorteilhaften Ausführungsform des erfindungsgemäßen Vakuumfiltrationsapparates ist das Klemmverbindungselement als ein Klemmbügel ausgebildet. Der Klemmbügel umschließt die zu verbindenden Flansche und den Flansch mit dem Verschlußstück randseitig vollständig. Somit werden die verbundenen Flansche bzw. das Verschlußstück und der Flansch über deren gesamten Randbereich gleichmäßig gegeneinander gedrückt, so daß im Bereich der Flansche eine gleichmäßige Abdichtung gegenüber der Umgebung erzielt wird.

In einer besonders vorteilhaften Ausführungsform des erfindungsgemäßen Vakuumfiltrationsapparates weist der Klemmbügel einen im wesentlichen U-förmigen Querschnitt auf, dessen offen Seite den Flanschen bzw. dem Verschlußstück und dem Flansch zugewandt ist, so daß die Flansche randseitig in den Querschnitt hineinragen, wenn die Verbindung hergestellt ist. Die sich gegenüberliegenden Innenseiten des Querschnittes des Klemmbügels sind derart angeschrägt, daß die Flansche beim Schließen des Klemmbügels gegeneinander gedrückt werden. Somit verengt sich der innenliegende Bereich des Querschnittes in Richtung einer den Flanschen bzw. dem Verschlußstück abgewandten Seite. Durch die Anschrägung der Innenseiten des Querschnittes werden die zu verbindenden Flansche bzw. der Flansch und das Verschlußstück während des Schließens zusammengedrückt, wobei die Anpreßkraft kontinuierlich zunimmt.

In einer weiteren vorteilhaften Ausführungsform des erfindungsgemäßen Vakuumfiltrationsapparates sind die Flansche an den Endseiten des Vakuumrohres, der Flansch an der Schlaucholive, das Verschlußstück und die Dichtungen kreisrund ausgebildet und weisen den gleichen Durchmesser auf. Auf diese Weise entstehen keinerlei Kompatibilitätsprobleme an den Verbindungsstellen und es können einheitliche Verbindungselemente verwandt werden. Des weiteren sind die Dichtungen ringförmig ausgebildet und weisen einen Innendurchmesser auf, der dem Innendurchmesser des Vakuumrohres entspricht.

In einer weiteren vorteilhaften Ausführungsform des erfindungsgemäßen Vakuumfiltrationsapparates sind die Dichtungen als Flachdichtungen ausgebildet.

In einer weiteren vorteilhaften Ausführungsform des erfindungsgemäßen Vakuumfiltrationsapparates umfaßt der Filtrationsaufsatz einen verschließbaren Behälter, einen Filter und eine Ablaufleitung, wobei die Ablaufleitung mit dem Anschlußstück verbindbar ist. Durch die Austauschbarkeit der Filtrationsaufsätze kann die Kapazität bezüglich einer zu untersuchenden Substanz verändert werden.

In einer weiteren vorteilhaften Ausführungsform des erfindungsgemäßen Vakuumfiltrationsapparates ist an der Ablaufleitung ein Mechanismus zum Öffnen und Schließen der Ablaufleitung vorgesehen.

In einer besonders vorteilhaften Ausführungsform des erfindungsgemäßen Vakuumfiltrationsapparates ist an dem Anschlußstück ein Mechanismus zum Öffnen und Schließen des Anschlußstückes vorgesehen. Der Mechanismus zum Öffnen und Schließen des Anschlußstückes ist ein Mechanismus, der geeignet ist, eine Strömung durch das Anschlußstück in das Vakuumrohr zu verhindern oder zu ermöglichen, wie z. B. Ventile, Schieber, Hähne und Drehschieber oder Klappen.

In einer weiteren vorteilhaften Ausführungsform des erfindungsgemäßen Vakuumfiltrationsapparates sind an dem Vakuumrohr Standfüße vorgesehen. Die Standfüße sind derart ausgebildet, daß die Längsachse des Anschlußstückes senkrecht zu einer ebenen Fläche ausgerichtet ist, auf der der Vakuumfiltrationsapparat abgestellt wird.

Das erfindungsgemäße Modul zur Erweiterung des Vakuumfiltrationsapparates der oben beschriebenen Art umfaßt mindestens einen Filtrationsaufsatz, ein Vakuumrohr mit mindestens einem Anschlußstück zur Aufnahme des Filtrationsaufsatzes, eine weitere Dichtung und ein Verbindungselement, wobei das Vakuumrohr an den Endseiten Flansche aufweist. Vorzugsweise entsprechen der Filtrationsaufsatz, das Vakuumrohr mit Anschlußstück, die Dichtung und das Verbindungselement den in gleicher Weise bezeichneten Bestandteilen des Vakuumfiltrationsapparates, so daß keinerlei Kompatibilitätsprobleme entstehen und die Bestandteile gegeneinander austauschbar sind. Ein Modul der vorbeschriebenen Art ermöglicht die Erweiterung des Vakuumfiltrationsapparates um eine weitere Stufe und benötigt dazu kein Verschlußstück, keine Schlaucholive und lediglich ein weiteres Verbindungselement.

Die erfindungsgemäße Vakuumsfiltrationsvorrichtung umfaßt einen Vakuumfiltrationsapparat der oben beschriebenen Art und mindestens ein Modul der vorbeschriebenen Art, wobei die Flansche der Vakuumrohre mit einer zwischenliegenden Dichtung mittels eines Verbindungselementes verbunden sind, das Verschlußstück mit der Dichtung mittels eines Verbindungselementes mit dem endseitigen Flansch der Vakuumfiltrationsvorrichtung dichtend verbunden und die Schlaucholive mit der Dichtung mittels eines Verbindungselementes mit dem anderen endseitigen Flansch der Vakuumfiltrationsvorrichtung verbunden ist.

Im folgenden wird die Erfindung an Hand von Beispielen unter Bezugnahme auf die beigefügten Figuren näher erläutert.

Es zeigen:
- Fig. 1: eine perspektivische Explosionsdarstellung des erfindungsgemäßen Vakuumfiltrationsapparates,
- Fig. 2: eine perspektivische Explosionsdarstellung des Moduls zur Erweiterung des Vakuumfiltrationsapparates, und
- Fig. 3: eine Seitenansicht einer Vakuumsfiltrationsvorrichtung aus einem Vakuumfiltrationsapparat und einem Modul zur Erweiterung des Vakuumfiltrationsapparates in geschnittener Darstellung.

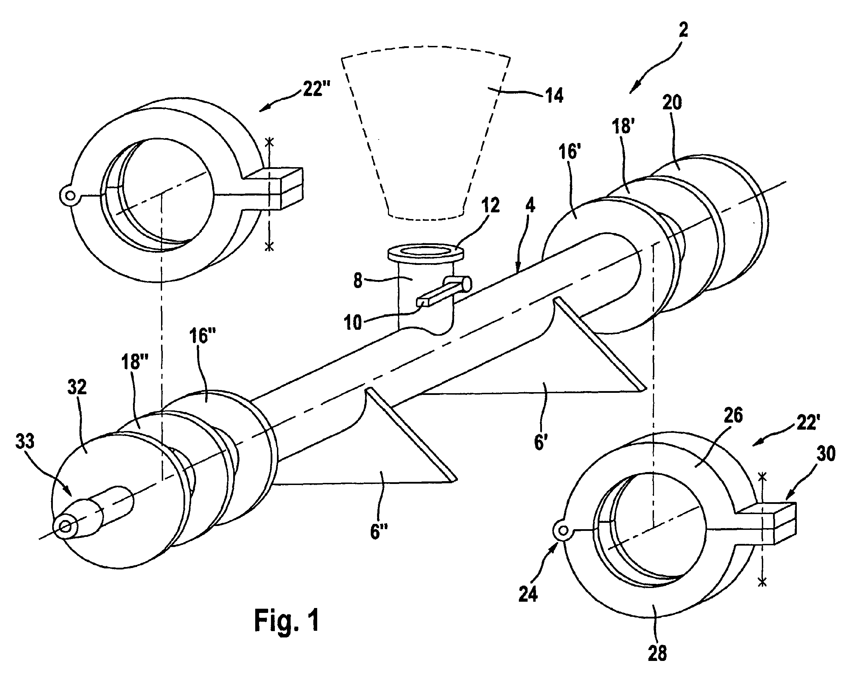

Fig. 1 zeigt eine perspektivische Explosionsdarstellung des erfindungsgemäßen Vakuumfiltrationsapparates 2. Der Vakuumfiltrationsapparat 2 weist ein gerades Vakuumrohr 4 auf, das auf zwei Standfüßen 6',6" ruht. Die Standfüße 6',6'' ermöglichen ein Abstellen des Vakuumfiltrationsapparates 2 auf einer ebenen Fläche. Von der den Standfüßen 6',6'' abgewandten Seite des Vakuumrohres 4 erstreckt sich ein Anschlußstück 8 im wesentlichen senkrecht nach oben. Das Anschlußstück 8 ist rohrförmig ausgebildet und weist in seinem Innern einen nicht dargestellte Mechanismus zum Öffnen und Schließen des Anschlußstückes 8 auf. Dieser Mechanismus zum Öffnen und Schließen wird über einen seitlich am Anschlußstück 8 angeordneten Hebel 10 betätigt. An dem freien Ende des Anschlußstückes 8 ist ein Verbindungsflansch 12 angebracht, der der Verbindung mit einem Filtrationsaufsatz 14 dient, der lediglich schematisch und gestrichelt dargestellt ist. Der Filtrationsaufsatz 14 umfaßt einen verschließbaren Behälter, einen Filter und eine Ablaufmündung, die direkt an den Flansch 12 angrenzt. Der Einfachheit halber ist in Fig. 1 lediglich ein Anschlußstück 8 vorgesehen, allerdings kann ein einzelnes Vakuumrohr 4 mehrere nebeneinander angeordnete Anschlußstücke 8 aufnehmen, die wiederum mit jeweils einem Filtrationsaufsatz 14 verbunden sind.

Das Vakuumrohr 4 weist an beiden Enden jeweils einen kreisrunden Flansch 16' bzw. 16'' auf, die den gleichen Durchmesser haben. An den Flansch 16' des einen Endes schließt sich eine ringförmige Flachdichtung 18' an, deren Innendurchmesser dem Innendurchmesser des Vakuumrohres 4 und deren Außendurchmesser dem Durchmesser des angrenzenden Flansches 16' entspricht. In Richtung der Längsachse des Vakuumrohres 4 ist hinter der Flachdichtung 18' ein Verschlußstück 20 angeordnet, das als eine Kreisscheibe ausgebildet ist, die den gleichen Durchmesser wie der Flansch 16' bzw. die Flachdichtung 18' hat. Der Flansch 16', die Flachdichtung 18'und das Verschlußstück 20 werden durch einen Klemmbügel 22' in Richtung der Längsachse des Vakuumrohres 4 zusammengedrückt, der diese randseitig umschließt.

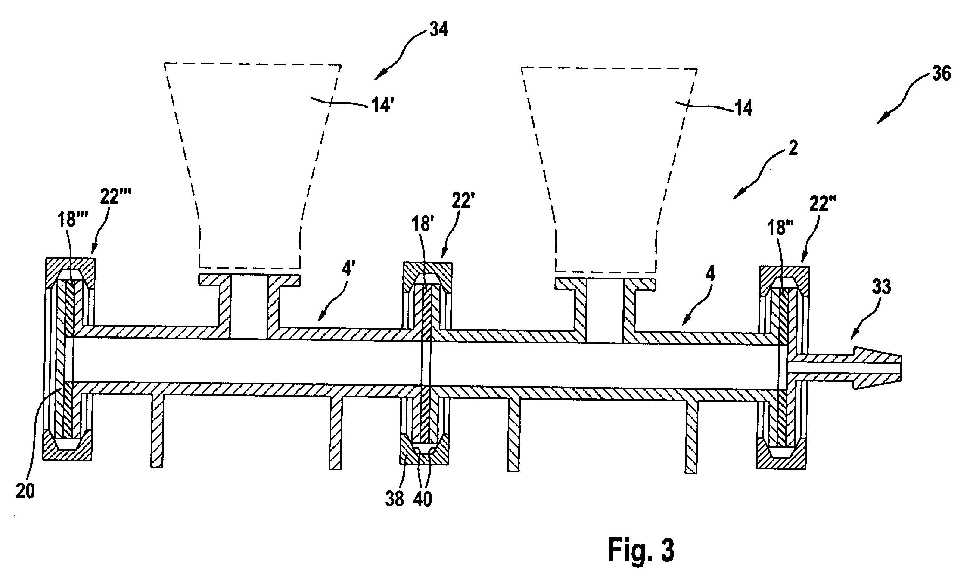

Der Klemmbügel 22' ist ringförmig ausgebildet und weist zwei über ein Gelenk 24 miteinander verbundene Bügel 26,28 auf. Der Klemmbügel 22' ist aufklappbar und weist auf der dem Gelenk 24 gegenüberliegenden Seite eine Aufnahme 30 für ein nicht dargestelltes Befestigungsmittel auf, über das der Klemmbügel 22' fest verschlossen wird. Der weitere Aufbau sowie die Funktionsweise des Klemmbügels 22' wird unter Bezugnahme auf die Fig. 3 näher erläutert.

An dem Flansch 16" des anderen Endes des Vakuumrohres 4 ist eine ringförmige Flachdichtung 18'' angeordnet, die der Flachdichtung 18' entspricht, wobei die Flachdichtung 18'' wiederum den gleichen Durchmesser wie der der Flansch 16'' hat. In Richtung der Längsachse des Vakuumrohres 4 ist hinter der Flachdichtung 18'' der umlaufende Flansch 32 einer Schlaucholive 33 angeordnet, wobei der umlaufende Flansch 32 einen dem Flansch 16'' entsprechenden Durchmesser aufweist. Der Flansch 32, die Flachdichtung 18'' und der Flansch 16''werden wiederum von einem Klemmbügel 22'' randseitig umschlossen, der diese verbindet. Der Klemmbügel 22'' entspricht in seinem Aufbau und seiner Funktionsweise dem Klemmbügel 22' an der gegenüberliegenden Endseite des Vakuumrohres 4.

Über den Kanal in der Schlaucholive 33 wird eine Strömungsverbindung zum Innenraum des Vakuumrohres 4 hergestellt. Die Schlaucholive 33 dient der Aufnahme eines nicht dargestellten Schlauches, der wiederum zu einer nicht dargestellten Vakuumpumpe o. ä. führt, über die das Vakuumrohr evakuierbar ist.

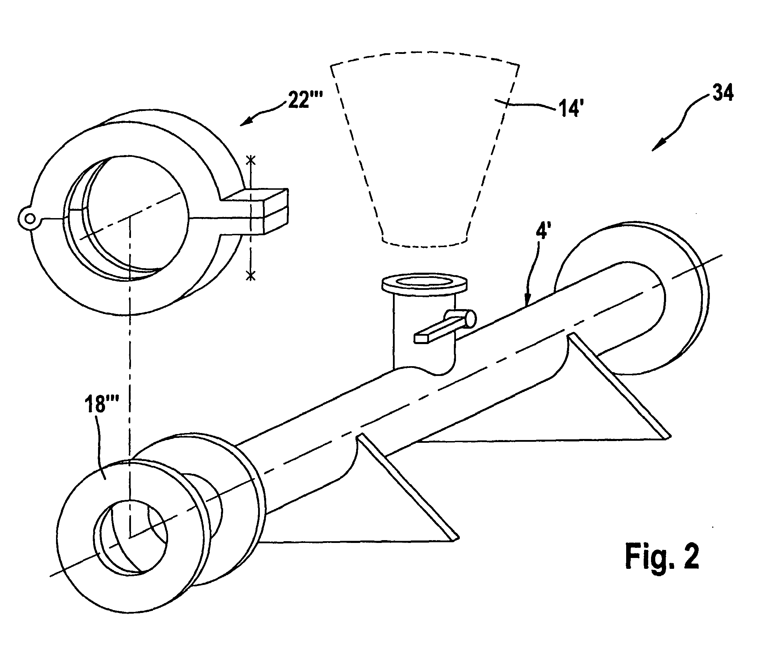

Fig. 2 zeigt eine perspektivische Explosionsdarstellung des Moduls 34 zur Erweiterung des Vakuumfiltrationsapparates 2 aus Fig. 1. Das Modul 34 umfaßt einen Filtrationsaufsatz 14', ein Vakuumrohr 4', eine Flachdichtung 18''' und einen Klemmbügel 22'''. Die genannten Elemente haben den gleichen Aufbau und die gleiche Funktion wie die ebenso bezeichneten Elemente des Vakuumfiltrationsapparates 2 aus Fig. 1. Mit dem dargestellten Modul 34 kann der Vakuumfiltrationsapparat 2 erweitert werden, indem die Vakuumrohre 4,4' mit den Längsachsen fluchtend hintereinander angeordnet und verbunden werden, so daß eine Vakuumfiltrationsvorrichtung mit größerer Kapazität entsteht.

Fig. 3 zeigt eine Seitenansicht einer solchen Vakuumfiltrationsvorrichtung 36, die sich aus dem Vakuumfiltrationsapparat von Fig. 1 und dem Modul zur Erweiterung des Vakuumfiltrationsapparates nach Fig. 2 zusammensetzt, in geschnittener Darstellung. Im Sinne einer größeren Anschaulichkeit wurde in Fig. 3 auf die Darstellung des Mechanismus zum Schließen und Öffnen des Anschlußstückes 8 verzichtet. Die dargestellte Vakuumsfiltrationsvorrichtung 36 wurde wie folgt zusammengesetzt. Bei dem Vakuumfiltrationsapparat 2 von Fig. 1 wurde der Klemmbügel 22' gelöst, um das Verschlußstück 20 zu entnehmen. Anstelle des Verschlußstückes 20 wurde ein endseitiger Flansch des Vakuumrohres 4' des Moduls 34 derart angeflanscht, daß die beiden Vakuumrohre 4,4' fluchtend angeordnet sind. Im Anschluß daran wird der Klemmbügel 22' wieder geschlossen. An dem dem Vakuumfiltrationsapparat 2 abgewandten Ende des Moduls 34 wird unter Zwischenlage der Flachdichtung 18''' des Moduls 34 das Verschlußstück 20 angeflanscht, das über den Klemmbügel 22''' mit dem Flansch des Vakuumrohres 4' verklemmt wird.

Am Beispiel des Klemmbügels 22' soll im folgenden der Aufbau und die Funktionsweise der Klemmbügel 22', 22'', 22''' näher erläutert werden. Der Klemmbügel 22' weist einen im wesentlichen U-förmigen Querschnitt 38 auf, dessen offene Seite jeweils den Flanschen zugewandt ist, so daß die Flansche randseitig in den Querschnitt hineinragen, wenn die Verbindung hergestellt ist. Die sich gegenüberliegenden Innenseiten des Querschnittes des Klemmbügels weisen Schrägen 40 auf, so daß die Flansche beim Schließen des Klemmbügels 22' gegeneinander gedrückt werden, wobei die Anpreßkraft kontinuierlich zunimmt.

## Patentansprüche

1. Vakuumfiltrationsapparat zur modularen Verwendbarkeit mit mindestens einem Filtrationsaufsatz (14) sowie einem Vakuumrohr (4) mit mindestens einem Anschlußstück (8) zur Aufnahme des Filtrationsaufsatzes (14) und einem Flansch (16'') an einer Endseite,
**dadurch gekennzeichnet, daß** das Vakuumrohr (4) an der anderen Endseite einen Flansch (16'') aufweist, wobei ferner ein Verschlußstück (20) mit einer Dichtung (18'), das mittels eines Verbindungselementes (22') mit dem endseitigen Flansch (16') an der anderen Endseite dichtend verbindbar ist, und eine Schlaucholive (33) mit umlaufendem Flansch (32) sowie einer weiteren Dichtung (18'') vorgesehen sind, wobei der umlaufende Flansch (32) der Schlaucholive (33) mittels eines weiteren Verbindungselementes (22'') mit dem anderen endseitigen Flansch (16'') an der einen Endseite verbindbar ist.

2. Vakuumfiltrationsapparat nach Anspruch 1, **dadurch gekennzeichnet, daß** das Verbindungselement (22',22") ein Klemmverbindungselement ist.

3. Vakuumfiltrationsapparat nach Anspruch 2, **dadurch gekennzeichnet, daß** das Klemmverbindungselement ein Klemmbügel ist, der die zu verbindenden Flansche und den Flansch und das Verschlußstück randseitig umschließt.

4. Vakuumfiltrationsapparat nach Anspruch 3, **dadurch gekennzeichnet, daß** der Klemmbügel einen im wesentlichen U-förmigen Querschnitt (38) aufweist, in den die Flansche (16',16'',32) randseitig hineinragen, wobei die sich gegenüberliegenden Innenseiten des Querschnitts derart angeschrägt sind, daß die Flansche (16', 16'', 32) beim Schließen des Klemmbügels gegeneinander drückbar sind.

5. Vakuumfiltrationsapparat nach einem der Ansprüche 1 bis 4, **dadurch gekennzeichnet, daß** die Flansche (16',16") an den Endseiten des Vakuumrohres (4), der Flansch (32) an der Schlaucholive (33), das Verschlußstück (20) und die Dichtungen (18',18'') kreisrund sind und den gleichen Durchmesser aufweisen, wobei die Dichtungen (18',18") ringförmig ausgebildet sind und einen dem Innendurchmesser des Vakuumrohres (4) entsprechenden Innendurchmesser aufweisen.

6. Vakuumfiltrationsapparat nach einem der Ansprüche 1 bis 5, **dadurch gekennzeichnet, daß** die Dichtungen (18', 18") Flachdichtungen sind.

7. Vakuumfiltrationsapparat nach einem der Ansprüche 1 bis 6, **dadurch gekennzeichnet, daß** der Filtrationsaufsatz (14) einen verschließbaren Behälter, einen Filter und eine Ablaufleitung umfaßt, wobei die Ablaufleitung mit dem Anschlußstück (8) verbindbar ist.

8. Vakuumfiltrationsapparat nach Anspruch 7, **dadurch gekennzeichnet, daß** an der Ablaufleitung ein Mechanismus zum Öffnen und Schließen der Ablaufleitung vorgesehen ist.

9. Vakuumfiltrationsapparat nach einem der Ansprüche 1 bis 7, **dadurch gekennzeichnet, daß** an dem Anschlußstück (8) ein Mechanismus zum Öffnen und Schließen des Anschlußstückes vorgesehen ist.

10. Vakuumfiltrationsapparat nach einem der Ansprüche 1 bis 9, **dadurch gekennzeichnet, daß** an dem Vakuumrohr (4) Standfüße (6',6") vorgesehen sind.

11. Modul zur Erweiterung des Vakuumfiltrationsapparates nach einem der Ansprüche 1 bis 10 mit
mindestens einem Filtrationsaufsatz (14'),
einem Vakuumrohr (4') mit mindestens einem Anschlußstück zur Aufnahme des Filtrationsaufsatzes (14'), wobei das Vakuumrohr an den Endseiten Flansche aufweist,
einer Dichtung (18'''), und
einem Verbindungselement (22''').

12. Modulare Vakuumfiltrationsvorrichtung mit
einem Vakuumfiltrationsapparat (2) nach einem der Ansprüche 1 bis 10, und
mindestens einem Modul (34) nach Anspruch 11,
wobei die Flansche der Vakuumrohre (4,4') mit einer zwischenliegenden Dichtung mittels eines Verbindungselementes (22') derart verbunden sind, daß die Vakuumsfiltrationsvorrichtung einen ersten und einen zweiten endseitigen Flansch aufweist, das Verschlußstück (20) mit der Dichtung mittels eines Verbindungselementes (22''') mit dem ersten endseitigen Flansch der Vakuumfiltrationsvorrichtung (36) dichtend verbunden und der umlaufende Flansch (32) der Schlaucholive (33) mit der Dichtung mittels eines Verbindungselementes (22") mit dem zweiten endseitigen Flansch der Vakuumfiltrationsvorrichtung (36) verbunden ist.

## Claims

1. Vacuum filter device to be used as a module, having at least one top-mounted filtering unit (14) and having a vacuum tube (4) which has at least one connection (8) to receive the top-mounted filtering unit (14) and which has a flange (16") at one end, **characterised in that** the vacuum tube (4) has a flange (16') at the other end, there also being provided a closing-off member (20), having a seal (18'), which can be connected with a seal to the end-flange (16') at the other end by means of a connecting element (22'), and a nipple (33) for flexible piping which has a circumferentially extending flange (32) and a further seal (18"), the circumferentially extending flange (32) of the nipple (33) for flexible piping being able to be connected to the other end-flange (16") at the one end by means of a further connecting element (22").

2. Vacuum filter device according to claim 1, **characterised in that** the connecting element (22', 22") is a clamping connecting element.

3. Vacuum filter device according to claim 2, **characterised in that** the clamping connecting element is a clamping clip which encloses the flanges to be connected and the flange and closing-off member at their edges.

4. Vacuum filter device according to claim 3, **characterised in that** the clamping clip's cross-section (38) into which the flanges (16', 16", 32) project at their edges is U-shaped, the inside faces of the cross-section which are situated opposite one another being bevelled in such a way that the flanges (16', 16", 32) can be pressed towards one another as the clamping clip is closed.

5. Vacuum filter device according to one of claims 1 to 4, **characterised in that** the flanges (16', 16") at the ends of the vacuum tube (4), the flange (32) on the nipple (33) for flexible piping, the closing-off member (20) and the seals (18', 18") are circular and of the same diameter, the seals (18', 18") being of an annular form and being of an inside diameter which corresponds to the inside diameter of the vacuum tube (4).

6. Vacuum filter device according to one of claims 1 to 5, **characterised in that** the seals (18', 18 ") are gaskets.

7. Vacuum filter device according to one of claims 1 to 6, **characterised in that** the top-mounted filtering unit (14) comprises a sealable container, a filter and an outlet duct, the outlet duct being able to be connected to the connection (8).

8. Vacuum filter device according to claim 7, **characterised in that** a mechanism for opening and closing the outlet duct is provided on the outlet duct.

9. Vacuum filter device according to one of claims 1 to 7, **characterised in that** a mechanism for opening and closing the connection (8) is provided on the connection.

10. Vacuum filter device according to one of claims 1 to 9, **characterised in that** supporting feet (6', 6") are provided on the vacuum tube (4).

11. Module for extending the vacuum filter device according to one of claims 1 to 10,
having at least one top-mounted filtering unit (14'),
having a vacuum tube (4') which has at least one connection to receive the top-mounted filtering unit (14'), the vacuum tube having flanges at the ends,
having a seal (18"') and
having a connecting element (22"').

12. Modular vacuum filter apparatus
having a vacuum filter device (2) according to one of claims 1 to 10 and
at least one module (34) according to claim 11,
the flanges of the vacuum tube (4, 4') being connected, with an inter-inserted seal, by means of a connecting element (22') in such a way that the vacuum filter apparatus has a first and a second end-flange, the closing-off member (20), together with the seal, is connected, with a seal, to the first end-flange of the vacuum filter apparatus (36) by means of a connecting element (22"'), and the circumferentially extending flange (32) of the nipple (33) for flexible piping, together with the seal, is connected to the second end-flange of the vacuum filter apparatus (36) by means of a connecting element (22").

## Revendications

1. Appareil de filtration sous vide pour l'utilisation modulaire avec au moins un embout de filtration (14) ainsi qu'un tube à vide (4) avec au moins une pièce de raccordement (8) pour la réception de l'embout de filtration (14) et une bride (16") à une extrémité, **caractérisé en ce que** le tube à vide (4) comprend une bride (16') à l'autre extrémité, dans lequel sont également prévus un obturateur (20) avec un joint (18'), qui est apte à être relié à la bride (16') côté extrémité au niveau de l'autre extrémité de manière à assurer l'étanchéité au moyen d'un élément de raccordement (22'), et une olive de tuyau (33) avec une bride (32) périphérique ainsi qu'avec un autre joint (18"), la bride (32) périphérique de l'olive de tuyau (33) est apte à être reliée à l'autre bride (16") côté extrémité au niveau d'une des extrémités au moyen d'un autre élément de raccordement (22'').

2. Appareil de filtration sous vide selon la revendication 1, **caractérisé en ce que** l'élément de raccordement (22', 22'') est un élément de raccordement par serrage.

3. Appareil de filtration sous vide selon la revendication 2, **caractérisé en ce que** l'élément de raccordement par serrage est un étrier de serrage, qui entoure par les bords les brides à raccorder et la bride et l'obturateur.

4. Appareil de filtration sous vide selon la revendication 3, **caractérisé en ce que** l'étrier de serrage comprend une section transversale (38) essentiellement en forme de U, dans laquelle les brides (16', 16", 32) pénètrent par les bords, les faces intérieures de la section transversale se faisant face étant biseautées de telle manière que les brides (16', 16'', 32) sont aptes à être serrées les unes contre les autres lors de la fermeture de l'étrier de serrage.

5. Appareil de filtration sous vide selon l'une quelconque des revendications 1 à 4, **caractérisé en ce que** les brides (16', 16") aux extrémités du tube à vide (4), la bride (32) au niveau de l'olive de tuyau (33), l'obturateur (20) et les joints (18', 18") sont circulaires et comprennent le même diamètre, les joints (18', 18'') étant réalisés sous forme annulaire et comprenant un diamètre intérieur correspondant au diamètre intérieur du tube à vide (4).

6. Appareil de filtration sous vide selon l'une quelconque des revendications 1 à 5, **caractérisé en ce que** les joints (18', 18'') sont des joints plats.

7. Appareil de filtration sous vide selon l'une quelconque des revendications 1 à 6, **caractérisé en ce que** l'embout de filtration (14) comprend un récipient verrouillable, un filtre et une conduite d'évacuation, la conduite d'évacuation pouvant être reliée à la pièce de raccordement (8).

8. Appareil de filtration sous vide selon la revendication 7, **caractérisé en ce qu'**il est prévu au niveau de la conduite d'évacuation un mécanisme permettant d'ouvrir et de fermer la conduite d'évacuation.

9. Appareil de filtration sous vide selon l'une quelconque des revendications 1 à 7, **caractérisé en ce qu'**il est prévu au niveau de la pièce de raccordement (8) un mécanisme permettant d'ouvrir et de fermer l'obturateur.

10. Appareil de filtration sous vide selon l'une quelconque des revendications 1 à 9, **caractérisé en ce que** des pieds d'appuis (6', 6'') sont prévus au niveau du tube à vide (4).

11. Module d'élargissement de l'appareil de filtration sous filtre selon l'une quelconque des revendications 1 à 10 comprenant
➢ au moins un embout de filtration (14'),
➢ un tube à vide (4') avec au moins une pièce de raccordement pour la réception de l'embout de filtration (14'), le tube à vide comprenant des brides aux extrémités,
➢ un joint (18'''), et
➢ un élément de raccordement (22"').

12. Dispositif de filtration sous vide modulaire comprenant
➢ un appareil de filtration sous vide (2) selon l'une quelconque des revendications 1 à 10 et
➢ au moins un module (34) selon la revendication 11,
➢ les brides des tubes à vide (4, 4') étant reliées à un joint intercalaire au moyen d'un élément de raccordement (22') de telle manière que le dispositif de filtration sous vide comprenant une première et une deuxième bride côté extrémité, l'obturateur (20) avec le joint étant relié à la première bride côté extrémité du dispositif de filtration sous vide (36) de manière à assurer l'étanchéité au moyen d'un élément de raccordement (22''') et la bride (32) périphérique de l'olive de tuyau (33) avec le joint étant reliée à la deuxième bride côté extrémité du dispositif de filtration sous vide (36) au moyen d'un élément de raccordement (22'').
